# EUROPEAN PATENT APPLICATION

(11) **EP 1 718 087 A1**
(43) Date of publication of application: **02.11.2006**
(21) Application number: 05076010.7
(22) Date of filing: 28.04.2005
(51) Int. Cl.: H04Q 7/32

(54) **Device and method for automatically selecting one of a set of SIM card readers comprised by a communications device for setting up an outgoing call**

(71) Applicant: Koninklijke KPN N.V., 2516 CK The Hague (NL)
(72) Inventor: Van Steenbergen, Ate Sander, 9737 NN Groningen (NL)
(74) Representative: Wuyts, Koenraad Maria

(57) **Abstract**

It is disclosed that a communications device (1) comprising two or more SIM card readers (13,14) comprises an algorithm for automatically selecting which SIM card reader to use for setting up an outgoing call. Optionally the communications device (1) can comprise a telephone list in which for each telephone number it is specified which SIM card reader (13,14) is preferred for setting up an outgoing call. The algorithm can make use of different types of parameters for selecting a SIM card reader.

## Description

### FIELD OF THE INVENTION

The present invention relates to a communications device and a method for automatically selecting one of a set of SIM card readers for setting up an outgoing call.

### BACKGROUND OF THE INVENTION

Regarding communications devices such as mobile telephones it is known that more than one SIM (Subscriber Identification Module) can be comprised. This is, for instance, described in US 5,987,325. According to this prior art a mobile telephone can have two telephone numbers associated therewith because two SIM cards are comprised by the mobile telephone. From this prior art it is also known how to register a mobile telephone comprising two SIM cards in a telephone network and how to handle incoming calls. However, the prior art does not disclose how to select a SIM card for setting up an outgoing call. As a consequence of more than one SIM card being comprised by a mobile telephone, several specific procedures are required (for instance in relation to the registration process) that are normally not required when only one SIM card is comprised. One can imagine that also in relation to the process of setting up an outgoing call specific measures should be taken if more than one SIM card is comprised by a mobile telephone. A disadvantage of the prior art is that no measures are disclosed in relation to the selection process for a multi SIM card communications device.

### AIM OF THE INVENTION

It is an object of the invention to eliminate the drawbacks of the prior art and to provide a communications device and a method for automatically selecting a SIM card reader for outgoing calls in the case that more than one SIM card is comprised by a communications device.

### SUMMARY OF THE INVENTION

In accordance with this invention, a communications device and a method are disclosed, the communications device comprising:
a user interface, a controller unit, memory means, a first subscriber identification module (SIM) card reader able to contain a first SIM card, a second SIM card reader able to contain a second SIM card, the first SIM card being associated with a first telephone number, the second SIM card being associated with a second telephone number, and the controller unit comprising an algorithm for automatically selecting which SIM card reader to use for setting up an outgoing call.

In a first aspect of the invention is disclosed that a communications device comprising more than one SIM (Subscriber Identification Module) card reader comprises means for automatically selecting the SIM card reader via which an outgoing should be set up The communications device may be a mobile device such as a mobile telephone, a personal digital assistant or any other mobile device that comprises one or more SIM cards. The communication device may also be a fixed device such as a wired telephone or an end-user device that can be connected to a fixed network. The communications device can communicate according to any type of mobile or fixed communication protocol. It may also be the case that the communications device supports both mobile and fixed communications protocols. Examples of fixed communication protocols are ISDN, ADSL, IP, and VDSL. Examples of mobile communication protocols are GPRS, GSM, UMTS and Bluetooth. Instead of comprising more than one SIM card reader the communications device may comprise one SIM card reader that is equipped for containing more than one SIM card. For instance, there, may be several compartments in the SIM card reader whereby each compartment can contain a SIM card.

The communications device according to the invention comprises an algorithm for selecting the preferred SIM card reader for setting up an outgoing call. The algorithm may be comprised by memory means that can be part of the communications device. Via the algorithm It Is possible to automatically select a 31M card reader comprised by the communications device based on one or more parameters. In this way it can for instance be possible that e.g. business related outgoing calls are set up via one SIM card reader and private related outgoing calls are set up via another SIM card reader. Also embodiments whereby more than two SIM card readers are comprised by the communications device are included in the present invention. As stated before, it is also possible that the communications device comprises one SIM card reader that is equipped for containing more than one SIM card. In otherwords, more than one SIM card readers can be integrated into one integrated SIM card reader. Different SIM cards may be contained by the integrated SIM card reader. The integrated SIM card reader may for instance comprise several compartments that each can contain a SIM card. In such a case the present invention applies to the selection of a compartment instead of selecting a SIM card reader for setting up an outgoing call. According to the invention it is also possible that a SIM card is selected for setting up an outgoing call instead of selecting a SIM card reader. For example, if it is known where a SIM card is located in the communications device the SIM card can be selected for setting up an outgoing call.

An input parameter that is used by the algorithm for selecting a SIM card reader can be of any type such as but not limited to parameters inputted via the user interface of the communications device, information present in the memory means of the communications device, the actual geographical location of the communications device, the telephone number to which the outgoing call is to be set up, or the instance of time that the telephone number to be dialed is entered by the user. The algorithm can additionally or alternatively use other information, such as the format (e.g. the number of digits) of the telephone number. More than one parameter may be combined by the algorithm for selecting the preferred SIM card reader. It is also possible that the algorithm uses characteristics relating to one or more service or network operators. For instance, pricing information may be used by the algorithm for selecting a SIM card reader in order to select the cheapest operator for handling an outgoing call.

In another aspect of the invention a telephone list is comprised by the memory means of the communications device. However it may also be possible that the memory means are not comprised by the communications device, but instead are comprised by another device that can be (by wire or wirelessly) connected to the communications device. The telephone list can contain one or more telephone numbers whereby there can be associated to each telephone number a preferred SIM card reader that should be used when setting up an outgoing call to the concerning telephone number.

According to the invention it may be possible that it is presented via the user interface of the communications device which SIM card is inserted in which SIM card reader. An advantage is that a user is able to check which SIM card actually is contained by which SIM card reader. It is also possible that, in the case that a preferred SIM card reader does not contain a SIM card, the outgoing call is set up via a SIM card reader that does contain a SIM card.

According to the present invention also a method is disclosed for selecting a preferred SIM card reader for setting up an outgoing call. The selection can be made by an algorithm comprised by the communications device, and one or more parameters may be used by the algorithm in the selection process. There are no limitations in relation to the parameter type and the way a parameter is provided to the algorithm. For instance a parameter can be inputted via the user interface of the communications device, but a parameter may also be received by the communications device via an antenna or another receiving means comprised by the communications device.

### BRIEF DESCRIPTION OF THE DRAWING FIGURE

The foregoing aspects and many of the attendant advantages of this invention will become better understood by reference to the following detailed description, when taken in conjunction with the accompanying drawing, wherein:
FIG. 1 is a block diagram illustrating a communications device (1) that comprises two SIM card readers.
FIG. 2 is a block diagram depicting a number of components comprised by a communications device (1) according to the invention.
FIG. 3 is a flow diagram illustrating the process of configuring the SIM card reader preference or selection.
FIG. 4 is a flow diagram illustrating the process of automatically selecting a SIM card in relation to setting up an outgoing call.

### EXEMPLARY EMBODIMENTS

For the purpose of teaching of the invention, preferred embodiments of the method and devices of the invention are described in the sequel. It will be apparent to the person skilled in the art that other alternative and equivalent embodiments of the invention can be conceived and reduced to practice without departing form the true spirit of the invention, the scope of the invention being limited only by the appended claims as finally granted.

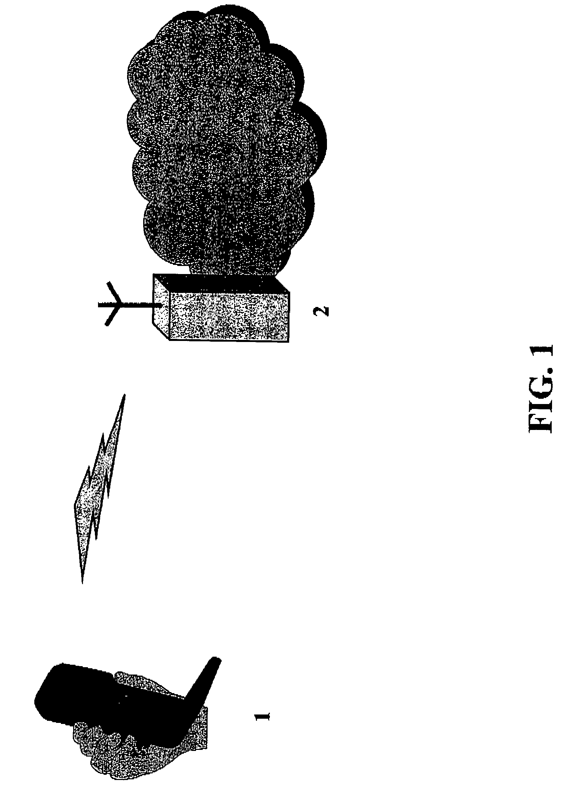

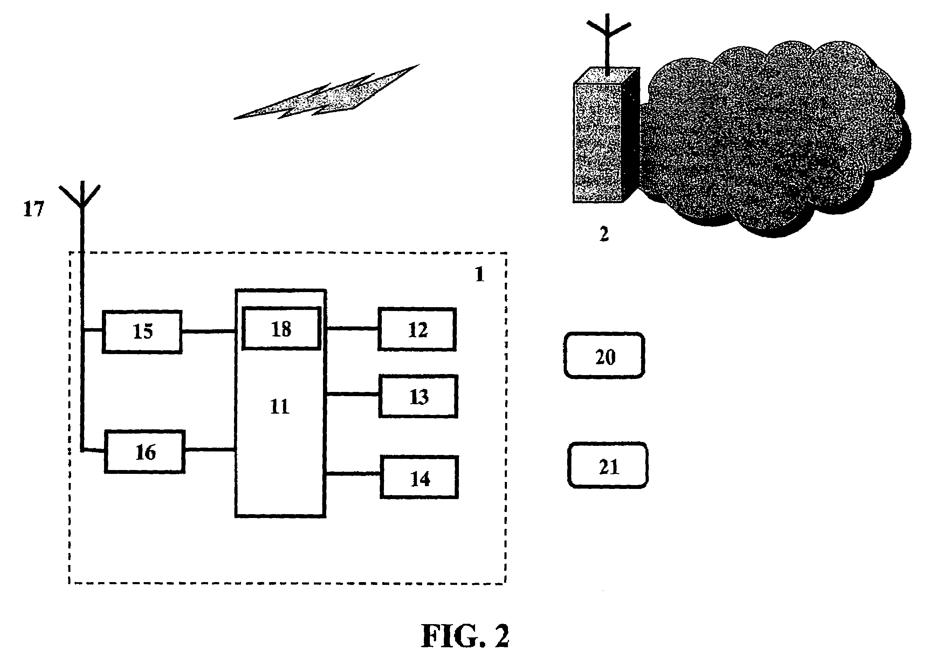

FIG.1 shows a communications device (1) that comprises more than one SIM (Subscriber Identification Module) card readers. In this embodiment the communications device (1) is a mobile communications device. The communications device (1) may for instance be a mobile telephone or a personal digital assistant. Signals may be transmitted between the communications device (1) and a transceiver (2), such as a base station. The signals between the communications device (1) and the transceiver (2) may be transmitted according to any type of communication protocol. Examples of such communication protocols are CPRS, GSM and UMTS. In general, the transceiver (2) is connected to or is part of a communication network (3). Via the communication network (3) a user of the communications device (1) is able to communicate to another user that is connected, directly or indirectly, to the communications network (3) via another communications device. In FIG.2 a number of components comprised by the communications device (1) is depicted that may play a role in using the communications device (1). A user interface (12) is comprised by the communications device (1), which user interface (12) may comprise a display, a speaker and a keyboard. The communications device (1) comprises a first SIM card reader (13) and a second SIM card reader (14). The first SIM card reader (13) can be used for containing a first SIM card (20); the second SIM card reader (14) can be used for containing a second SIM card (21). In general there are one or more identification numbers associated to each of the SIM cards (20, 21). For instance, a telephone number may be an identification number associated to a SIM card (20, 21). In addition, a PIN code may also be an identification number associated to a SIM card (20, 21). It may also be possible that even more types of identification numbers are associated to each of the SIM cards (20, 21). Because more than one SIM card can be comprised by the communications device (1), incoming calls can be received by the communications device (1) via different telephone numbers. For instance, a user may set up and receive business related calls via the communications device (1) via a first telephone number and private calls via a second telephone number. As a consequence, each call category can be handled via a different SIM card (20, 21). In practice this would imply that calls of a specific category are handled via a specific SIM card reader (13, 14) since a SIM card reader (13, 14) contains a SIM card (20, 21).

There may also be user specific or other information comprised by each SIM card (20, 21), such as billing information and information specifying to which communications networks the SIM card (20, 21) is associated to. The billing for the outgoing calls via said first telephone number can in this respect be done via the first SIM card (20) while the billing for outgoing calls via said second telephone number can be done via the second SIM card (21). There are no limitations relating the SIM cards (20, 21); both the first SIM card (20) and the second SIM card (21) may be of the subscription type or pre-paid type. Although two SIM card readers (13, 14) may be comprised by the communications device (1), it may be possible that the communications device (1) is used while only one of the two SIM card readers (13, 14) contains a SIM card (20, 21). In this situation, calls can only be set up and received via a SIM card reader (13, 14) that contains a SIM card (20, 21). Further, it may also be possible that more than two SIM card readers are comprised by the communications device (1).

Via an antenna (17) signals may be received and transmitted. A receiver (15) is able to receive signals via the antenna (17) and to demodulate the signals into information signals after which the information signals can be outputted to a controller unit (11). The controller unit (11) is able to convert the information signals into a format suitable to be presented to the user via the user-interface (12). In the context of outgoing calls, voice and/or data signals from the user-interface (12) are processed by the controller unit (11) and the processed signals are outputted to a transmitter (16). The transmitter is able to convert the received signal into a signal that can be sent via the antenna (17). The controller unit (11) may comprise a microprocessor and a memory means (18) such as a ROM, RAM and/or EEPROM. According to the present invention the controller unit (11) may comprise an algorithm for determining via which SIM card reader (13, 14) an outgoing call should be set up. The algorithm for selecting a SIM card reader (13, 14) may for instance be based on input parameters inputted via the user interface (12), on information already present in the memory means (18), on the actual geographical location of the communications device (1) or on the instance of time that the telephone number to be dialed is entered. The algorithm for determining the preferred SIM can additionally or alternatively use other information, such as the format (e.g. the number of digits) of the telephone number. For instance, if the dialed telephone number contains five digits then the first SIM card reader (13) is the preferred SIM card reader. If for instance the telephone number contains ten digits, then the second SIM card reader (14) is the preferred SIM card reader.

It may also be the case that a telephone list is comprised by the memory means (18). The telephone list can contain one or more telephone numbers whereby there can be associated to each telephone number a preferred SIM card reader (13, 14) that should be used when setting up an outgoing call to the concerning telephone number. For instance, for each telephone number there can be an entry in the telephone list which entry comprises a telephone number field and a SIM card reader preference field. An advantage of this is that a specific SIM card reader (13, 14) can be selected automatically when an outgoing call is to be set up without requiring the user tomake a choice at the time that the telephone number is selected. In another embodiment the user can instead of or alternatively to selecting a telephone number from a telephone list enter a telephone number via the user interface (12), whereby the preferred SIM card reader that is associated to the entered telephone number is determined according to information that is comprised by the memory means (18). This information may or may not be part of a telephone list.

In general there may also be present a telephone list on a SIM card (20, 21). If this is the case, then it should be defined how to set up an outgoing call to the telephone number selected from a telephone list comprised by a SIM card (20, 21). The outgoing call can be set up via the concerning SIM card, or measures could be taken in the communications device (1) for outputting via a SIM card reader (13, 14) the selected telephone number towards the controller unit (11) so that eventually another SIM card reader (13, 14) can be selected for setting up the outgoing call.

According to the invention it may, for instance on request of the user, be shown to the user via the user interface (12) which SIM card (20, 21) is inserted in which SIM card reader (13, 14). This can be useful if the user wants to check if the right SIM card (20, 21) is actually contained by a SIM card reader (13, 14).

If a preferred SIM card reader does not contain a SIM card (20, 21) at the time that the outgoing call has to be set up, the preferred SIM card reader (13, 14) is not able to handle the outgoing call. In such a case there could be an alternative scenario. For instance, via the controller unit (11) and the user interface (12) the user is informed that the preferred SIM card reader (13, 14) does not contain a SIM card (20, 21). Another option is that the outgoing call is set up via a SIM card reader (13, 14) that does contain a SIM card (20, 21). It may also be possible that the user is requested for instructions relating how to process the outgoing call further (e.g. set up the outgoing call via the another SIM card reader (13, 14)).

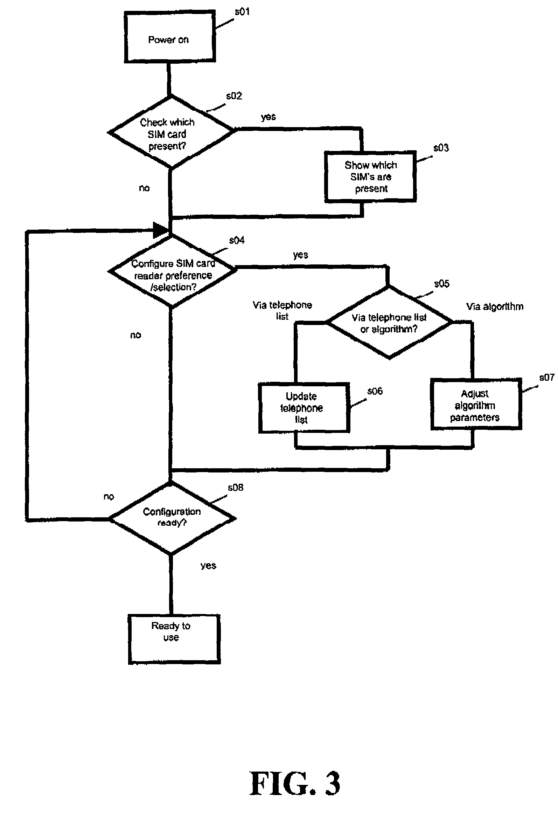

FIG. 3 contains a flowchart that illustrates a possible embodiment according the present Invention. In step s01 the communications device (1) is turned on. In step s02 the user can decide if he wants to check which SIM cards (20, 21) are actually contained by the SIM card readers (13, 14). If the user desires to check this, information relating the SIM card / SIM card reader combinations can be displayed in step s03 via the user interface (12). This information can comprise, amongst others, the telephone number that is associated with a contained SIM card (20, 21). Step s02 could also be optional so that information regarding inserted SIM cards is standard shown or not shown. The user is able to select in step s01 if he wants to configure the SIM card reader preference or a parameter that can be used by the algorithm in the selection process of a SIM card reader. If the SIM card reader preference is determined according to a telephone list, the SIM card reader preference field associated with a certain telephone number can be set in steps s05 and s06. If the SIM card preference is determined via an algorithm, one or more parameters can be adjusted in step s07. In step s08 the user can choose if he wants to repeat the configuration process.

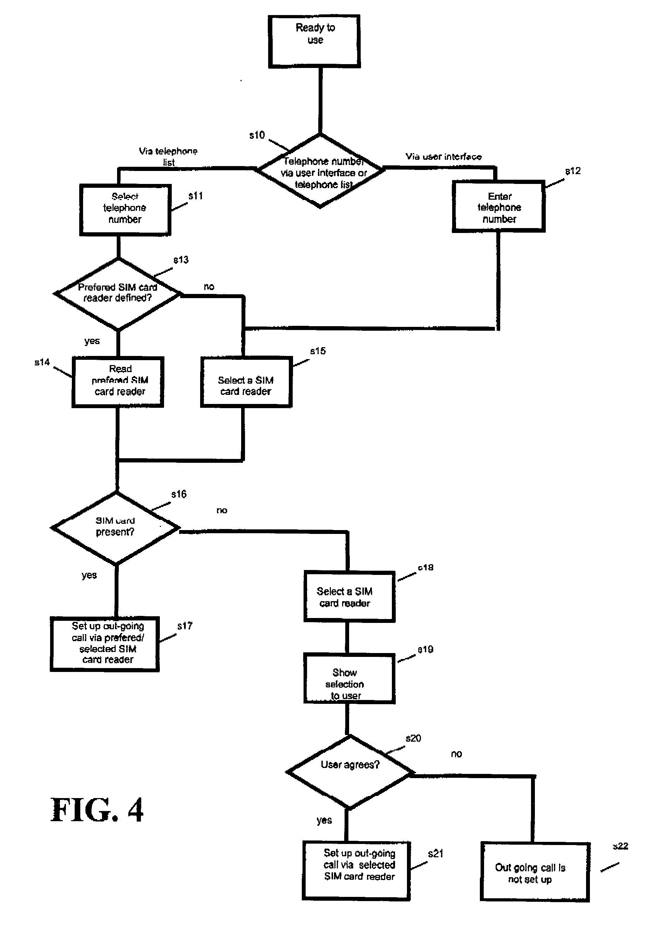

In FIG. 4 the steps are depicted that are related to setting up an outgoing call. In step s10 the user determines if he wants to set up a call by entering a telephone number via the user interface (12) or if a telephone number is selected via a telephone list comprised by the controller unit (11). If the telephone number is selected via a telephone list, this will be done in step s11. In step s13 it is determined if the preferred SIM card reader (13, 14) is defined in the SIM card reader preference field. If this is not the case, a SIM card reader (13, 14) is in step s15 selected according to the algorithm. Step 15 is also performed via step s12, i.e. the telephone number is entered via the user interface (12). After step s14 and s15 it is check if the SIM card reader (13, 14) derived in step s14 or s15 contains a SIM card (20, 21). If this is the case, the outgoing call is set up via the preferred or selected SIM card reader (13, 14) in step s17. If the SIM card reader (13, 14) does not contain a SIM card (20, 21), a SIM card reader (13, 14) is in step s18 selected according to the algorithm. The selected SIM card reader (13, 14) is shown to the user via the user interface (12) in step s19 after which the user can decide in step s20 whether (step s21) or not (step s22) the outgoing call can be set up via the selected SIM card reader (13, 14).

Various steps shown in FIG. 3 and FIG. 4 may be optional. For instance, steps s19 and s20 may not be implemented in an embodiment. A possible consequence of this might be that step s21 Is performed automatically after a SIM card reader (13, 14) is selected in step s18.

The algorithm referred to in steps 15 and 18 may use multiple parameters and may comprise various rules that apply to many different kinds of situations. For instance, it may be the case that a telephone number selected from the telephone list was previously stored in the telephone list automatically after having received via a SIM card reader (13, 14) an incoming call originated from that telephone number. A rule can then be that the SIM card reader (13, 14) via which the incoming call was received earlier, is selected for setting up the outgoing call. In the case that a telephone number was stored from a SIM card into the telephone list, a rule can be that the SIM card reader (13, 14) is selected that contains the SIM card (20, 21) from which the telephone number was imported.

## Claims

1. A communications device (1) comprising a user interface (12), a controller unit (11), memory means (18), a first accessing means for accessing a SIM card, a second accessing means for accessing a SIM card, a first SIM card (20) that is associated with a first telephone number, a second SIM card (21) that is associated with a second telephone number, and the controller unit (11) comprising an algorithm for automatically selecting which SIM card (20, 21) to use for setting up an outgoing call.

2. A communications device (1) according to claim 1, whereby the first and the second accessing means are integrated into one accessing means.

3. A communications device (1) according to claim 1 or 2, whereby the first accessing means is a first SIM card reader (13) and the second accessing means is a second SIM card reader (14).

4. A communications device (1) according to claim 3, the memory means (18) comprising a telephone list that comprises an entry whereby said entry comprises a telephone number field that can contain a telephone number and a SIM card reader preference field that can contain a reference to a preferred SIM card reader (13, 14), which reference can be used by said algorithm for setting up an outgoing call.

5. A communications device (1) according to claim 1, 2, 3 or 4, whereby the communication device (1) is a mobile communication device.

6. Method for setting up a call via a communications device (1) according to claim 3 or 5 comprising the steps of:
entering via the user interface (12) a telephone number to which an outgoing call is to be set up;
and selecting by said algorithm the first SIM card reader (13) or the second SIM card reader (14) for setting up the outgoing call dependent on a parameter.

7. Method for setting up a call via a communications device (1) according to claim 6 whereby said parameter is the instance of time that the telephone number is entered.

8. Method for setting up a call via a communications device (1) according to claim 6 whereby said parameter is comprised by the memory means (18).

9. Method for setting up a call via a communications device (1) according to claim 6 whereby said parameter is said entered telephone number.

10. Method for setting up a call via a communications device (1) according to claim 6 whereby said parameter relates to pricing information.

11. Method for setting up a call via a communications device (1) according to claim 6 whereby said parameter is the geographical location of the communications device (1).

12. Method for setting up a call via a communications device (1) according to claim 4 or 5 comprising the steps of:
selecting via the user interface (12) from said telephone list the telephone number to which an outgoing call is to be set up:
reading said reference to a SIM card reader (13, 14) from said SIM card reader preference field of the entry that corresponds to the selected telephone number; and
selecting via the controller unit (11), according to said reference, the SIM card reader (13, 14) for setting up the outgoing call.

13. Method for setting up a call via a communications device (1) according to claim 3 - 12 whereby, in the case that the selected SIM card reader (13, 14) is not containing a SIM card, the outgoing call is set up via another SIM card reader (13, 14).

14. Method for setting up a call via a communications device (1) according to claim 3 - 13, whereby the telephone number associated to the SIM card (20, 21) contained in a SIM card reader (13, 14) can be presented via the user interface (12).

15. Method for setting up a call via a communications device (1) according to claim 3 or 4 whereby, in case of said reference to a SIM card reader (13, 14) is not defined in said SIM card reader preference field, the first SIM card reader (13) or the second SIM card reader (14) is selected dependent on a parameter via said algorithm for setting up the outgoing call to a telephone number that Is selected via the user interface (12) from said telephone list.

16. Method for setting up a call via a communications device (1) according to claim 15 whereby said parameter is the instance of time that the telephone number is selected.

17. Method for setting up a call via a communications device (1) according to claim 15 whereby said parameter is comprised by the memory means (18).

18. Method for setting up a call via a communications device (1) according to claim 15 whereby said parameter is said selected telephone number.

19. Method for setting up a call via a communications device (1) according to claim 15 whereby said parameter relates to pricing information.

20. Method for setting up a call via a communications device (1) according to claim 15 whereby said parameter is the geographical location of the communications device (1).
